# EUROPÄISCHE PATENTSCHRIFT

(11) **EP 1 962 637 B1**
(45) Veröffentlichungstag und Bekanntmachung des Hinweises auf die Patenterteilung: **31.10.2012**
(21) Anmeldenummer: 06829544.3
(22) Anmeldetag: 13.12.2006
(51) Int. Cl.: A46B 7/04, A46B 11/00

(54) **ZAHNBÜRSTE**
TOOTHBRUSH
BROSSE À DENTS

(30) Priorität: 22.12.2005 DE 102005061491
(43) Veröffentlichungstag der Anmeldung: 03.09.2008
(73) Patentinhaber: Braun GmbH, 61476 Kronberg im Taunus (DE)
(72) Erfinder: LANDFESTER, Alexander, 64285 Darmstadt (DE); KLAWUHN, Manfred, 60322 Frankfurt/Main (DE)
(86) Internationale Anmeldenummer: PCT/EP2006/011967
(87) Internationale Veröffentlichungsnummer: WO 2007/079884

(56) Entgegenhaltungen:
- WO-A-95/08282
- DE-A1- 19 729 516
- US-A1- 4 615 635
- US-A1- 5 039 244
- US-A1- 6 095 710

## Beschreibung

Die vorliegende Erfindung betrifft eine vorzugsweise elektrische Zahnbürste mit einem Handteil und einem abnehmbaren Zahnbürstenkopf. Die Erfindung betrifft dabei einerseits den Zahnbürstenkopf der Zahnbürste, der ein Borstenfeld und eine Kupplungseinrichtung zum Ankuppeln an ein Handteil der Zahnbürste aufweist, wobei am Zahnbürstenkopf eine Leitung zum Fördern eines pastösen, gelartigen und/oder flüssigen Applikationsstoffs, insbesondere Zahnpasta, vorgesehen ist und die Kupplungseinrichtung eine Leitungskupplung zum Ankuppeln der Leitung an einen handteilseitigen Leitungsabschnitt aufweist. Andererseits betrifft die Erfindung auch das Handteil einer solchen Zahnbürste mit einer Kupplungsrichtung zum Ankuppeln des Zahnbürstenkopfs, wobei das Handteil ebenfalls eine Leitung zum Fördern eines pastösen, gelartigen und/oder flüssigen Applikationsstoffs, insbesondere Zahnpasta, besitzt und die Kupplungseinrichtung eine Leitungskupplung zum Ankuppeln der handteilseitigen Leitung an die bürstenkopfseitige Leitung aufweist.

Aus der DE 197 29 516 ist eine manuelle Zahnbürste bekannt, bei der Zahnpasta aus einem Speicher im Handteil durch eine Leitung, die im Inneren eines abnehmbaren Zahnbürstenkopfs ausgebildet ist, auf ein Borstenfeld am Zahnbürstenkopf gefördert werden kann. Bei elektrischen Zahnbürsten ist der zur Verfügung stehende Raum im Zahnbürstenkopf sehr beschränkt, da dort gleichzeitig der Antriebsstrang zur Übertragung der Antriebsbewegung auf den Bürstenkopf unterzubringen ist. Die Zahnpastaleitung und insbesondere die dieser zugeordnete Leitungskupplung muss sehr kleinbauend sein, um sie überhaupt im Zahnbürstenkopf unterbringen zu können. Außerdem werden bei elektrischen Zahnbürsten häufig die Bürstenköpfe gewechselt, z. B. wenn ein Handteil von mehreren Anwendern genutzt wird, so dass jeder sein Aufsatzbürstchen auf das Handteil aufsteckt und wieder abnimmt. Verbleibt im abgenommenen Zahnbürstenkopf bzw. der daran vorgesehenen Leitung Zahnpasta, kann diese eintrocknen und hierdurch die Leitung verstopfen.

Der vorliegenden Erfindung liegt hiervon ausgehend die Aufgabe zugrunde, eine verbesserte Zahnbürste, einen verbesserten Zahnbürstenkopf und ein verbessertes Handteil einer solchen Zahnbürste zu schaffen, die Nachteile des Standes der Technik vermeiden und letzteren in vorteilhafter Weise weiterbilden. Vorzugsweise soll eine einfache kleinbauende Leitungskupplung geschaffen werden, die ein Eintrocknen von Zahnpasta in der Leitung verhindert.

Erfindungsgemäß wird diese Aufgabe durch einen Zahnbürstenkopf gemäß Anspruch 1, ein Zahnbürstenhandteil gemäß Anspruch 14 sowie eine Zahnbürste gemäß Anspruch 27 gelöst. Bevorzugte Ausgestaltungen der Erfindung sind Gegenstand der abhängigen Ansprüche.

Es wird also vorgeschlagen, die Leitungskupplung, die die handteilseitige Leitung und die bürstenkopfseitige Leitung zur Förderung des Applikationsstoffes verbindet, derart auszubilden, dass der Leitungsquerschnitt beim Abkuppeln des Zahnbürstenkopfs vom Handteil automatisch verschlossen und beim Wiederankuppeln automatisch geöffnet wird. Die Leitungskupplung umfasst hierzu erfindungsgemäß ein Steuerventil, das beim Ankuppeln des Bürstenkopfs ans Handteil der Zahnbürste automatisch durch den Eingriff eines Ventilbetätigers öffnet und einen handteilseitigen Leitungsabschnitt mit einem bürstenkopfseitigen Leitungsabschnitt verbindet sowie beim Abkuppeln vom Handteil die Leitung automatisch verschließt. Das Steuerventil kann dabei grundsätzlich sowohl am Zahnbürstenkopf als auch am Handteil vorgesehen sein, wobei der Ventilbetätiger dann an dem jeweils anderen Zahnbürstenabschnitt angeordnet ist. Ein am Zahnbürstenkopf angeordnetes Steuerventil wird von einem am Handteil vorgesehenen Ventilbetätiger geöffnet, während ein am Handteil angeordnetes Steuerventil von einem am Zahnbürstenkopf vorgesehenen Ventilbetätiger geöffnet wird.

Als Ventilbetätiger kann dabei insbesondere das jeweils anzuschließende Leitungsende dienen. Wird das Steuerventil beim Ankuppeln des Zahnbürstenkopfs ans Handteil mit dem anzukuppelnden Leitungsabschnitt in Eingriff gebracht, öffnet sich dadurch das Steuerventil.

In Weiterbildung der Erfindung kann das Steuerventil hierzu einen elastischen Ventilöffner aufweisen, der von dem anzukuppelnden Leitungsende elastisch verform- und betätigbar ist. Wird beim Ankuppeln des Zahnbürstenkopfs ans Handteil das Steuerventil bzw. dessen elastischer Ventilöffnerabschnitt mit dem Endabschnitt der anzukuppelnden Leitung in Eingriff gebracht, verformt sich der Ventilöffner elastisch und öffnet hierdurch das Ventil. Wird umgekehrt der Zahnbürstenkopf vom Handteil der Zahnbürste abgenommen, so dass das angekuppelte Leitungsende außer Eingriff von dem Ventilöffner gerät, stellt sich dieser aufgrund seiner Elastizität automatisch in seine Ausgangsstellung zurück, wodurch das Ventil wieder verschlossen wird.

Vorteilhafterweise bildet der Ventilöffner gleichzeitig einen Kupplungsabschnitt, durch den der anzukuppelnde Leitungsabschnitt fluid- bzw. stoffdicht mit dem am Steuerventil angeschlossenen Leitungsabschnitt in Strömungsverbindung bringbar ist. Der Ventilöffner erhält hierdurch eine Doppelfunktion. Einerseits dient er beim An- und Abkuppeln dem Öffnen des Steuerventils. Andererseits stellt er den strömungsdichten Anschluss mit der anzukuppelnden Leitung sicher.

Der Ventilöffner kann insbesondere einen Aufnahmestutzen bilden, der beim Ankuppeln des Zahnbürstenkopfs ans Handteil auf das Ende der anzukuppelnden Leitung aufschiebbar ist. Dabei ist der Aufnahmestutzen vorteilhafterweise mit seinem Innendurchmesser kleiner als der Außendurchmesser des einzuschiebenden Leitungsendes ausgebildet, so dass beim Aufschieben auf das anzukuppelnde Leitungsende der Aufnahmestutzen eine radiale Aufweitung erfährt. Diese elastische Aufweitbewegung wird von dem Steuerventil umgesetzt in ein Öffnen des Ventilquerschnitts.

Um ein präzises Öffnen und Schließen des Ventils zu erreichen, kann zumindest eine Dichtlippe vorgesehen sein, die den Boden des vorgenannten Aufnahmestutzens bildet und mit diesem verbunden ist, so dass sie durch Aufweiten des Aufnahmestutzens aufmacht und bei einer Kontraktion des Aufnahmestutzens den Ventildurchtritt wieder schließt. Insbesondere ist die genannte Dichtlippe dabei an der mantelflächenseitigen Innenwandung des Aufnahmestutzens angeformt und springt von diesem nach innen in den Ventilkanal hinein vor, so dass sie sich bei einem Aufweiten des Aufnahmestutzens quer zur Strömungsrichtung durch das Ventil bewegen kann.

Nach einer besonders vorteilhaften Ausführung der Erfindung kann die genannte Dichtlippe zum Öffnen und Schließen des Ventilkanals von einem elastischen Quersteg bzw. einer elastischen Sperrwand gebildet sein, die in dem Ventilkanal des Steuerventils sitzt und ringförmig umlaufend mit der Ventilkanalwandung verbunden ist und vorzugsweise etwa mittig eine vorzugsweise etwa schlitzförmige Ventilöffnung aufweist, deren Ränder Dichtlippen bilden und im nicht geöffneten Zustand des Steuerventils fluiddicht aufeinander bzw. aneinander sitzen. Wird der vorgenannte Aufnahmestutzen und damit der Ventilkanal aufgeweitet, wird die elastische Sperrwand an ihren Rändern wegen ihrer Anbindung an die Ventilkanalwandung radial auseinander gezogen, wodurch sich die Ventillippen auseinander bewegen und die schlitzförmige Ventilöffnung aufmacht und vergrößert.

Um das Öffnen der Dichtlippen zu erleichtern, kann in Weiterbildung der Erfindung der Querschnitt des Ventilkorpus im Bereich der Sperrwand eine Verjüngung aufweisen. Insbesondere kann das Steuerventil auf seinem Außenumfang im Bereich der Sperrwand eine Einschnürung aufweisen, die das Aufweiten des an die Einschnürung anschließenden Anschlussstutzens und damit das Auseinanderziehen der Dichtlippen erleichtert. Zudem wird sozusagen das Aufweiten des Anschlussstutzens von dem auf der gegenüberliegenden Seite der Dichtlippen angeordneten Ventilabschnitt entkoppelt, d.h. es wird lediglich der Anschlussstutzen mit den damit verbundenen Dichtlippen aufgeweitet, während der restliche Ventilteil nicht oder zumindest nur unwesentlich aufgeweitet wird.

Mit dem Abschnitt der Leitung, der das Steuerventil fest zugeordnet ist, kann das Steuerventil durch einen Verbindungsabschnitt fest verbunden sein. Der Verbindungsabschnitt des Steuerventils kann dabei derart ausgebildet sein, dass er auf oder in die entsprechende Leitung steckbar ist. Vorteilhafterweise besitzt der Verbindungsabschnitt dabei einen umlaufenden Dichtungswulst, mit dem eine fluiddichte Abdichtung des Steuerventils gegenüber der jeweiligen Leitung bzw. den dieses begrenzenden Wandungsabschnitten erreichbar ist.

Das Steuerventil kann mehrteilig aufgebaut sein und Komponenten aus verschiedenen Materialien umfassen. In Weiterbildung der Erfindung jedoch ist das Steuerventil einstückig ausgebildet und besteht aus einem vollelastischen Ventilkorpus aus Weichkunststoff, ggf. auch Gummi oder einem gummiähnlichen Werkstoff.

Die Erfindung wird nachfolgend anhand eines Ausführungsbeispiels für eine elektrische Zahnbürste erläutert, die in den Zeichnungen dargestellt ist. Es zeigt:
- Fig. 1:: eine perspektivische Gesamtansicht einer elektrischen Zahnbürste mit einer Leitung zur Förderung von Zahnpasta zum Zahnbürstenkopf,
- Fig. 2:: eine perspektivische Schnittansicht eines Steuerventils im geschlossenen Zustand, und
- Fig. 3:: eine perspektivische Schnittansicht des Steuerventils aus Fig. 2 im geöffneten Zustand.

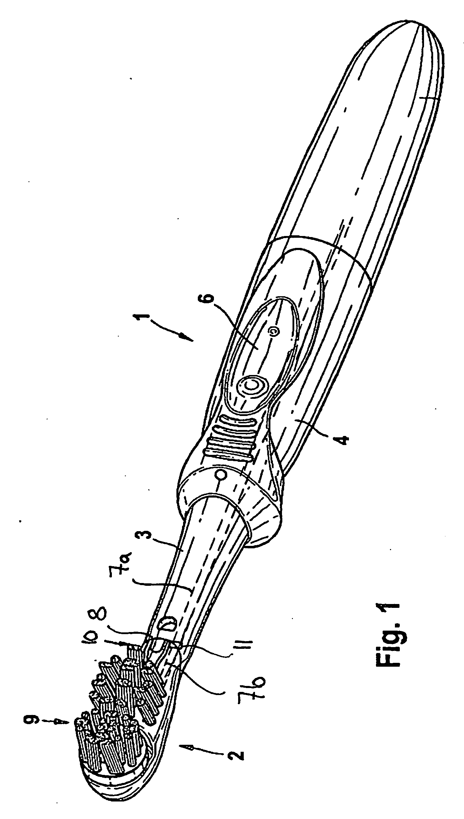

Die in Figur 1 gezeigte Zahnbürste umfasst ein Handteil 1 sowie einen Zahnbürstenkopf 2, der auf einem Bürstenrohr 3 sitzt, das ein stirnseitiges Ende des Handteils 1 bildet bzw. damit verbunden ist. Das Handteil 1 wird von einem Zahnbürstengehäuse 4 gebildet, in dem Batterien bzw. Akkus sowie ein Antriebsmotor angeordnet sind, der mittels eines Schalters 6 auf der Mantelfläche des Gehäuses 4 ein- und ausgeschaltet werden kann. Weiterhin ist im Handteil 1 ein Zahnpasta-Reservoir untergebracht, aus dem über eine im Bürstenrohr 3 untergebrachte Leitung 7a Zahnpasta zum Bürstenkopf 2 hin gefördert werden kann, wobei eine manuelle, aber auch eine motorische Förderung, z. B. mittels einer vom Antriebsmotor 5 angetriebenen Pumpe, vorgesehen sein kann.

Der Zahnbürstenkopf 2 besitzt ein antreibbares Borstenfeld 9, das über einen im Inneren des Bürstenrohres 3 aufgenommenen, nicht näher dargestellten Antriebsstrang rotatorisch oszillierend vom Antriebsmotor her angetrieben werden kann.

Wie Figur 1 zeigt, kann der Zahnbürstenkopf 2 an einer Schnittstelle 8 vom Handteil 1 getrennt werden. Die lösbare Verbindung zwischen dem Zahnbürstenkopf 2 und dem Handteil 1 wird durch eine Kupplungseinrichtung 10 bewirkt. Die Schnittstelle 8 kann auch zwischen dem Bürstenrohr 3 und dem Zahnbürstengehäuse 4 angeordnet sein, d.h. das Bürstenrohr 3 und der Zahnbürstenkopf 2 können einstückig ausgebildet sein.

Die Leitung 7 zur Förderung der Zahnpasta ist über die Schnittstelle 8 hinweggeführt, wobei in die Leitung 7 eine Fluid- bzw. Leitungskupplung 11 geschaltet ist, die Teil der Kupplungseinrichtung 10 ist und beim Aufstecken des Zahnbürstenkopfes 2 aufs Handteil 1 den handteilseitigen Abschnitt 7a der Leitung 7 mit dem bürstenkopfseitigen Abschnitt 7b der Leitung 7 kuppelt und andererseits beim Abnehmen des Zahnbürstenkopfes 2 ein Trennen der beiden Leitungsabschnitte 7a und 7b erlaubt.

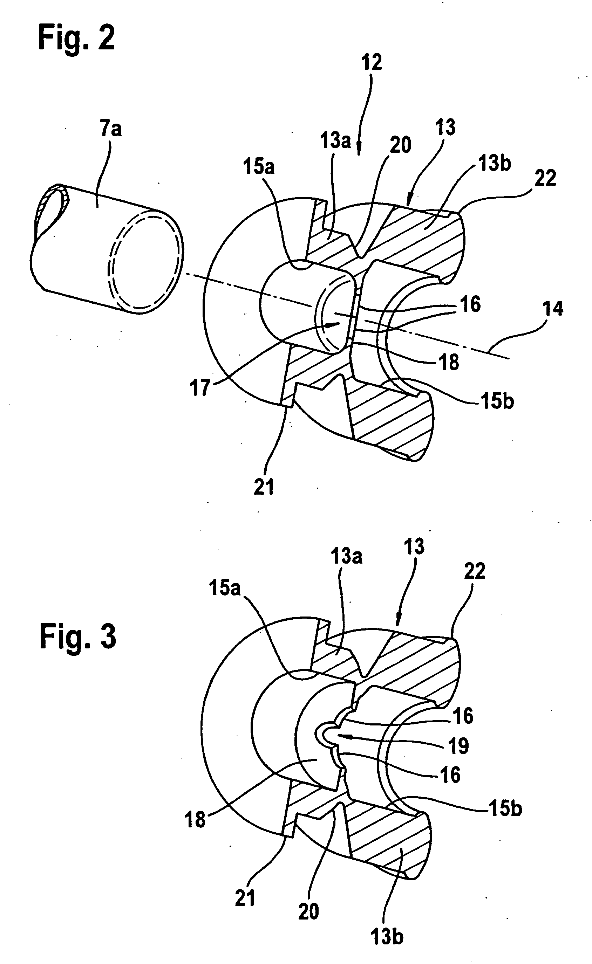

Die Leitungskupplung 11 umfasst dabei das in den Figuren 2 und 3 gezeigte Steuerventil 12, das in der gezeichneten Ausführung mit dem bürstenkopfseitigen Abschnitt 7b der Leitung 7 fest verbunden ist und mit dem handteilseitigen Abschnitt 7a der Leitung 7 lösbar verbindbar ist. Es versteht sich jedoch, dass auch auf dem handteilseitigen Abschnitt 7a der Leitung 7 ein solches Steuerventil 12 sitzen kann.

Das Steuerventil 12 besteht aus einem einstückigen, vollelastischen Ventilkorpus 13, der in der gezeichneten Ausführung im wesentlichen rotationssymmetrisch um eine Ventillängsachse 14 ausgebildet ist. Wie die Figuren 2 und 3 zeigen, ist in dem Ventilkorpus 13 ein Ventilkanal 15 ausgebildet, der von einem ebenfalls elastischen Steuerkörper 17 verschlossen und geöffnet werden kann. Als Steuerkörper 17 dient dabei eine Membran bzw. eine elastische Querwand 18, die im wesentlichen tellerförmig bzw. plattenförmig ausgebildet ist und sich im wesentlichen radial erstreckt. Die Quer- bzw. Sperrwand 18 ist dabei ringförmig umlaufend an der Innenwandung des Ventilkanals 15 angeformt und bildet sozusagen eine Trennwand, die den Ventilkanal 15 in die koaxial hintereinander liegenden Ventilkanalabschnitte 15a und 15b unterteilt.

In der Querwand 18 ist eine schlitzförmige Ventilkanalöffnung 19 ausgebildet, so dass die daran angrenzenden Abschnitte der Querwand 18 Dichtlippen 16 bilden, die im geschlossenen Zustand des Ventils gemäß Figur 2 aneinander anliegen und die Ventilkanalöffnung 19 verschließen.

Wie Figur 2 zeigt, besitzt der Ventilkorpus 13 im Bereich der Dichtlippen 16 auf seinem Außenumfang eine Einschnürung 20, in deren Bereich der Außendurchmesser des Ventilkorpus 13 verjüngt ist und die Wandstärke des Ventilkorpus 13 gegenüber den axial anschließenden Abschnitten reduziert ist. Dies erleichtert es, die Dichtlippen 16 zu öffnen.

Hierzu ist der gesamte Ventilkorpus 13 im Bereich des Kanalabschnittes 15a radial aufweitbar. Der Ventilkanalabschnitt 15a bildet einen Aufnahmestutzen, in den der handteilseitige Leitungsabschnitt 7a einsteckbar ist. Dabei ist der etwa zylindrische Ventilkorpusabschnitt 13a, der den genannten Kanalabschnitt 15a umgibt, mit seinem Innendurchmesser, der den Ventilkanalabschnitt 15a definiert, ein Stück kleiner ausgebildet als der Außendurchmesser des Leitungsabschnitts 7a, der in den Kanalabschnitt 15a eingeschoben werden soll. Wird der Zahnbürstenkopf 2 mittels der Kupplungseinrichtung 10 aufs Handteil 1 gesetzt, wird der Leitungsabschnitt 7a in den zu kleinen Kanalabschnitt 15a eingeschoben, so dass sich der Ventilkorpusabschnitt 13a aufweitet, wie dies Figur 3 zeigt. Durch das Aufweiten des Ventilkorpusabschnitt 13a wird auch die Trennwand 18 radial auseinander gezogen, wodurch die Dichtlippen 16 aufmachen und sich die Ventilkanalöffnung 19 zwischen den Dichtlippen 16 bildet, wie dies Figur 3 zeigt.

Der genannte Ventilkorpusabschnitt 13a bildet insofern einerseits den Ventilöffner, mit Hilfe dessen das Steuerventil 12, genauer gesagt dessen elastische Dichtlippen 16, geöffnet werden können. Gleichzeitig bildet der genannte Ventilkorpusabschnitt 13a einen Kupplungsabschnitt, mit Hilfe dessen das Steuerventil 12 lösbar mit dem anzukuppelnden Leitungsabschnitt 7a verbindbar ist.

Wie die Figuren 2 und 3 zeigen, erstreckt sich der genannte Ventilkorpusabschnitt 13a in der gezeichneten Ausführung von der Einschnürung 20 ausgehend zu dem einen Ende des Ventilkorpus 13 hin und ist im wesentlichen zylindrisch ausgebildet, wobei am stirnseitigen Ende des Ventilkorpusabschnitt 13a ein flanschförmiger, radialer Randsteg ausgebildet ist, der als Dichtung fungieren kann.

Der gegenüberliegende, auf der anderen Seite der Dichtlippen 16 liegende Kanalabschnitt 15b wird ebenfalls von einem im wesentlichen zylindrischen Ventilkorpusabschnitt 13b umschlossen, der ebenfalls an seinem stirnseitigen Ende einen radial nach außen gerichteten Dichtungswulst 22 besitzt. Der Ventilkorpusabschnitt 13b dient dabei der Verbindung des Steuerventils 12 mit dem bürstenkopfseitigen Leitungsabschnitt 7b, an dem das Steuerventil 12 befestigt sein kann.

Durch die frei wählbare Geometrie des Ventilkorpus 13, insbesondere seine Ventilkorpusabschnitte 13a und 13b, kann eine optimale Dichtfunktion gegenüber dem Bürstenrohr 3 bzw. dem Bürstenkopf 2 erreicht werden. Die eigentliche Schaltfunktion des Ventils liegt im Bereich der Dichtlippen 16 und des Durchmessers des Aufnahmestutzens 15a. Wird der Zahnbürstenkopf 2 ans Handteil 1 angekuppelt, wird der handteilseitige Leitungsabschnitt 7a in den genannten Aufnahmestutzen 15a eingeschoben, wodurch sich die Dichtlippen 16 öffnen und der Applikationsstoff, insbesondere die Zahnpasta, ungehindert hindurchfließen kann. Umgekehrt wird bei Abkupplung des Zahnbürstenkopfes 2 von dem Handteil 1 der genannte Leitungsabschnitt 7a wiederum aus dem Aufnahmestutzen 15a herausgezogen, wodurch sich die Dichtlippen 16 schließen und ein Eintrocknen der Zahnpasta verhindert wird.

## Patentansprüche

1. Zahnbürstenkopf, der von einem Handteil einer Zahnbürste abnehmbar ist, mit einem Borstenfeld (9) und einer Kupplungseinrichtung (10) zum Ankuppeln ans Handteil (1) der Zahnbürste, wobei am Zahnbürstenkopf (2) ein bürstenkopfseitiger Leitungsabschnitt (7b) zum Fördern eines pastösen, gelartigen und/oder flüssigen Applikationsstoffs, insbesondere Zahnpasta, vorgesehen ist, und die Kupplungseinrichtung (10) eine Leitungskupplung (11) zum Ankuppeln des bürstenkopfseitigen Leitungsabschnitts (7b) an einen handteilseitigen Leitungsabschnitt (7a) aufweist, **dadurch gekennzeichnet, dass** die Leitungskupplung (11) ein Steuerventil (12) aufweist, das beim Ankuppeln des Bürstenkopfs (2) ans Handteil (1) der Zahnbürste durch Eingriff eines am Handteil (1) vorgesehenen Ventilbetätigers, insbesondere das Ende des handteilseitigen Leitungsabschnitts, öffnet und den handteilseitigen Leitungsabschnitt (7a) mit dem bürstenkopfseitigen Leitungsabschnitt (7b) verbindet, sowie beim Abkuppeln vom Handteil (1) den bürstenkopfseitigen Leitungsabschnitt (7b) verschließt.

2. Zahnbürstenkopf nach dem vorhergehenden Anspruch, wobei das Steuerventil (12) einen Ventilkorpus (13) mit einem durch diesen hindurch tretenden Ventilkanal (15) aufweist, in dem eine elastische Sperrwand (18) mit einer sich elastisch schließenden Ventilkanalöffnung (19) vorgesehen ist.

3. Zahnbürstenkopf nach einem der vorhergehenden Ansprüche, wobei das Steuerventil (12) einen elastischen Ventilöffner (13a) aufweist, der von einem Ende des handteilseitigen Leitungsabschnitts (7a) elastisch verform- und betätigbar ist.

4. Zahnbürstenkopf nach dem vorhergehenden Anspruch, wobei der Ventilöffner (13a) einen Kupplungsabschnitt zum Ankuppeln des handteilseitigen Leitungsabschnitts (7a) bildet.

5. Zahnbürstenkopf nach einem der beiden vorhergehenden Ansprüche, wobei der Ventilöffner (13a) einen Aufnahmestutzen bildet, der durch Einfahren des handteilseitigen Leitungsabschnitts (7a) elastisch radial aufweitbar ist.

6. Zahnbürstenkopf nach einem der vorhergehenden Ansprüche, wobei das Steuerventil (12) zumindest eine elastische Dichtlippe (16) aufweist, die von dem handteilseitigen Ventilbetätiger betätigbar ist.

7. Zahnbürstenkopf nach den beiden vorhergehenden Ansprüchen, wobei die zumindest eine Dichtlippe (16) einen Boden des Aufnahmestutzens (15a) bildet.

8. Zahnbürstenkopf nach einem der vorhergehenden Ansprüche, wobei die zumindest eine Dichtlippe (16) mit dem Ventilöffner (13a) verbunden ist derart, dass die Dichtlippe (16) durch radiales Aufweiten des Ventilöffners (13a) öffnet.

9. Zahnbürstenkopf nach einem der vorhergehenden Ansprüche in Verbindung mit Anspruch 2, wobei die zumindest eine Dichtlippe von der elastischen Sperrwand (18) gebildet ist, wobei vorzugsweise die genannte Sperrwand (18) eine etwa mittig angeordnete und/oder schlitzförmige Ventilkanalöffnung (19) aufweist.

10. Zahnbürstenkopf nach einem der vorhergehenden Ansprüche, wobei das Steuerventil (12) auf seinem Außenumfang im Bereich der zumindest einen Dichtlippe (16) eine Einschnürung (20) aufweist.

11. Zahnbürstenkopf nach einem der vorhergehenden Ansprüche, wobei das Steuerventil (12) einstückig ausgebildet ist und/oder aus einem elastischen Vollkorpus, vorzugsweise aus Weichkunststoff und/oder Gummi, besteht.

12. Zahnbürstenkopf nach einem der vorhergehenden Ansprüche, wobei das Steuerventil (12) einen Verbindungsabschnitt (15b) besitzt, der auf und/oder in den bürstenkopfseitigen Leitungsabschnitt (7b) steckbar ist.

13. Handteil einer Zahnbürste mit einer Kupplungseinrichtung (10) zum Ankuppeln eines ein Borstenfeld (9) tragenden Zahnbürstenkopfs (2), mit einem handteilseitigem Leitungsabschnitt (7a) zum Fördern eines pastösen, gelartigen und/oder flüssigen Applikationsstoffs, insbesondere Zahnpasta, zu dem Zahnbürstenkopf (2), wobei die Kupplungseinrichtung (10) eine Leitungskupplung (11) zum Ankuppeln des handteilseitigem Leitungsabschnitts (7a) an einen bürstenkopfseitigen Leitungsabschnitt (7b) zur Förderung des Applikationsstoffs aufweist, **dadurch gekennzeichnet, dass** die Leitungskupplung (11) ein Steuerventil (12) aufweist, das beim Ankuppeln des Bürstenkopfs (2) ans Handteil (1) der Zahnbürste durch Eingriff eines am Zahnbürstenkopf (2) vorgesehenen Ventilbetätigers, insbesondere das Ende des bürstenkopfseitigen Leitungsabschnitts, öffnet und den handteilseitigen Leitungsabschnitt (7a) mit dem bürstenkopfseitigen Leitungsabschnitt (7b) verbindet, sowie beim Abkuppeln vom Handteil (1) den handteilseitigen Leitungsabschnitt (7a) verschließt.

14. Handteil nach dem vorhergehenden Anspruch, wobei das Steuerventil (12) einen Ventilkorpus (13) mit einem durch diesen hindurch tretenden Ventilkanal (15) aufweist, in dem eine elastische Sperrwand (18) mit einer sich elastisch schließenden Ventilkanalöffnung (19) vorgesehen ist.

15. Handteil nach einem der Ansprüche 13 oder 14, wobei das Steuerventil (12) einen elastischen Ventilöffner (15a) aufweist, der von einem Ende des bürstenkopfseitigen Leitungsabschnitts (7b) elastisch verform- und betätigbar ist.

16. Handteil nach dem vorhergehenden Anspruch, wobei der Ventilöffner (15a) einen Kupplungsabschnitt zum Ankuppeln des bürstenkopfseitigen Leitungsabschnitts (7b) bildet.

17. Handteil nach einem der beiden vorhergehenden Ansprüche, wobei der Ventilöffner (15a) einen Aufnahmestutzen bildet, der durch Einfahren des bürstenkopfseitigen Leitungsendes (7b) elastisch radial aufweitbar ist.

18. Handteil nach einem der Ansprüche 13 bis 17, wobei das Steuerventil (12) zumindest eine elastische Dichtlippe (16) aufweist, die von dem bürstenkopfseitigen Ventilbetätiger betätigbar ist.

19. Handteil nach den beiden vorhergehenden Ansprüchen, wobei die zumindest eine Dichtlippe (16) einen Boden des Aufnahmestutzens (15a) bildet.

20. Handteil nach einem der Ansprüche 13 bis 19, wobei die zumindest eine Dichtlippe (16) mit dem Ventilöffner (15a) verbunden ist derart, dass die Dichtlippe (16) durch radiales Aufweiten des Ventilöffners (13a, 15a) öffnet.

21. Handteil nach einem der Ansprüche 13 bis 20 in Verbindung mit Anspruch 14, wobei die zumindest eine Dichtlippe von der elastischen Sperrwand (18) gebildet ist, wobei vorzugsweise die genannte Sperrwand (18) eine etwa mittig angeordnete und/oder schlitzförmige Ventilkanalöffnung (19) aufweist.

22. Handteil nach einem der Ansprüche 13 bis 21, wobei das Steuerventil (12) auf seinem Außenumfang im Bereich der zumindest einen Dichtlippe (16) eine Querschnittseinschnürung (20) aufweist.

23. Handteil nach einem der Ansprüche 13 bis 22, wobei das Steuerventil (12) einstückig ausgebildet ist und/oder aus einem elastischen Vollkorpus, vorzugsweise aus Weichkunststoff und/oder Gummi, besteht.

24. Handteil nach einem der Ansprüche 13 bis 23, wobei das Steuerventil (12) einen Verbindungsabschnitt (15b) besitzt, der auf und/oder in den handteilseitigen Leitungsabschnitt (7a) steckbar ist.

25. Elektrische Zahnbürste mit einem Handteil nach einem der Ansprüche 13 bis 24 sowie einem damit kuppelbaren Zahnbürstenkopf (2) nach einem der Ansprüche 1 bis 12.

## Claims

1. A toothbrush head, which is removable from a hand piece of a toothbrush, having a bristle field (9) and a coupling device (10) for coupling to the hand piece (1) of the toothbrush, wherein a brush-head-side conduit segment (7b) is provided on the toothbrush head (2) for supplying an application material which is paste-like, gel-like, and/or liquid, particularly a toothpaste, and the coupling device (10) has a conduit coupling (11) for coupling the brush-head-side conduit segment (7b) to a hand-piece-side conduit segment (7a); **characterized in that** the conduit coupling (11) has a control valve (12) which opens when the brush head (2) is coupled to the hand piece (1) of the toothbrush by engagement of a valve actuator, in particular the end of the hand-piece-side conduit segment, provided on the hand piece (1) and connects the hand-piece-side conduit segment (7a) to the brush-head-side conduit segment (7b), and which valve closes off the brush-head-side conduit segment (7b) when the brush head (2) is uncoupled from the hand piece (1) .

2. The toothbrush head according to the preceding claim, wherein the control valve (12) has a valve body (13) with a valve channel (15) extending through it in which channel an elastic separating wall (18) having an elastically closing valve channel opening (19) is provided.

3. The toothbrush head according to one of the preceding claims, wherein the control valve (12) has an elastic valve opener (13a) which is elastically deformable and actuatable from an end of the hand-piece-side conduit segment (7a).

4. The toothbrush head according to the preceding claim, wherein the valve opener (13a) forms a coupling segment for coupling the hand-piece-side conduit segment (7a).

5. The toothbrush head according to one of the two preceding claims, wherein the valve opener (13a) forms a receiving nipple which may be elastically radially expanded by insertion of the hand-piece-side conduit segment (7a).

6. The toothbrush head according to one of the preceding claims, wherein the control valve (12) has at least one elastic sealing lip (16) which is actuatable by the hand-piece-side valve actuator.

7. The toothbrush head according to the two preceding claims, wherein the at least one sealing lip (16) forms a base of the receiving nipple (15a).

8. The toothbrush head according to one of the preceding claims, wherein the at least one sealing lip (16) is connected with the valve opener (13a) such that the sealing lip (16) opens by radial expansion of the valve opening means (13a).

9. The toothbrush head according to one of the preceding claims in combination with claim 2, wherein the at least one sealing lip is formed by the elastic separating wall (18), wherein preferably the aforementioned separating wall (18) has an approximately centrally disposed and/or slot-shaped valve channel opening (19).

10. The toothbrush head according to one of the preceding claims, wherein the control valve (12) has a narrowed region (20) on its outer periphery in the region of the at least one sealing lip (16).

11. The toothbrush head according to one of the preceding claims, wherein the control valve (12) is of unit construction, and/or is made of an elastic full body, preferably of a soft plastic and/or rubber material.

12. The toothbrush head according to one of the preceding claims, wherein the control valve (12) has a connecting segment (15b) which is pluggable onto and/or into the brush-head-side conduit segment (7b).

13. A hand piece of a toothbrush with a coupling device (10) for coupling of a toothbrush head (2) bearing a bristle field (9) with a hand-piece-side conduit segment (7a) for supplying an application material which is paste-like, gel-like, and/or liquid,
particularly a toothpaste, which material is to be supplied to the toothbrush head (2), wherein the coupling device (10) has a conduit coupling (11) for coupling the hand-piece-side conduit segment (7a) to a brush-head-side conduit segment (7b) for advancing the application material; **characterized in that** the conduit coupling (11) has a control valve (12) which opens when the brush head (2) is coupled to the hand piece (1) of the toothbrush by engagement of a valve actuator, in particular the end of the brush-head-side conduit segment, provided on the toothbrush head (2), and connects the hand-piece-side conduit segment (7a) to a brush-head-side conduit segment (7b) and which valve closes off the hand-piece-side conduit segment (7a) when the brush head (2) is uncoupled from the hand piece (1).

14. The hand piece according to the preceding claim, wherein the control valve (12) has a valve body (13) with a valve channel (15) extending through it, in which channel an elastic separating wall (18) having an elastically closing valve channel opening (19) is provided.

15. The hand piece according to claim 13 or 14, wherein the control valve (12) has an elastic valve opener (15a) which is elastically deformable and actuatable from an end of the brush-head-side conduit segment (7b).

16. The hand piece according the preceding claim, wherein the valve opener (15a) has a coupling segment for coupling the brush-head-side conduit segment (7b).

17. The hand piece according to one of the two preceding claims, wherein the valve opener (15a) forms a receiving nipple which is elastically radially expandable by insertion of the brush-head-side conduit end (7b).

18. The hand piece according to one of claims 13-17, wherein the control valve (12) has at least one elastic sealing lip (16) which is actuatable by the brush-head-side valve actuator (7b).

19. The hand piece according to the two preceding claims, wherein the at least one sealing lip (16) forms a base of the receiving nipple (15a).

20. The hand piece according to one of claims 13-19, wherein the at least one sealing lip (16) is connected with the valve opener (15a), such that the sealing lip (16) opens by radial expansion of the valve opening means (13a, 15a).

21. The hand piece according to one of claims 13-20 in combination with claim 14, wherein the at least one sealing lip is formed by the elastic separating wall (18), wherein preferably the aforementioned separating wall (18) has an approximately centrally disposed and/or slot-shaped valve channel opening (19).

22. The hand piece according to one of claims 13-21, wherein the control valve (12) has a cross-sectionally narrowed region (20) on its outer periphery in the region of the at least one sealing lip (16).

23. The hand piece according to one of claims 13-22, wherein the control valve (12) is of unit construction, and/or is made of an elastic full body, preferably of a soft plastic and/or rubber material.

24. The hand piece according to one of claims 13-23, wherein the control valve (12) has a connecting segment (15b) which may be plugged onto or into the hand-piece-side conduit segment (7a).

25. An electric toothbrush with a hand piece according to one of claims 13-24 and a toothbrush head (2) according to claims 1-12, which head (2) is coupleable to the hand piece.

## Revendications

1. Tête de brosse à dents, fixée de manière amovible sur un manche de brosse à dents, avec un ensemble de soies (9) et un dispositif de couplage (10) pour le couplage sur le manche (1) de la brosse à dents, dans laquelle une section de tuyau (7b) du côté de la tête de la brosse est prévue sur la tête de brosse à dents (2) pour le transport d'un matériau d'application sous forme de pâte, de gel et/ou de liquide, en particulier de la pâte dentifrice et le dispositif de couplage (10) présente un raccord de tuyau (11) pour le couplage de la section de tuyau (7b) du côté de la tête de la brosse avec une section de tuyau du côté du manche (7a), **caractérisée en ce que**, le raccord de tuyau (11) présente une soupape de commande (12), qui s'ouvre lors du couplage de la tête de la brosse (2) sur le manche (1) de la brosse à dents, par le biais de l'opération d'un actionneur de soupape prévu sur le manche (1), en particulier l'extrémité de la section de tuyau du côté du manche et relie la section de tuyau (7a) du côté du manche avec la section de tuyau (7b) du côté de la tête de la brosse et se ferme lors du découplage du manche (1) de la section de tuyau du côté de la tête de la brosse (7b).

2. Tête de brosse à dents selon la revendication précédente, dans laquelle la soupape de commande (12) présente un corps de soupape (13) avec un canal de soupape le traversant (15), dans laquelle une paroi formant barrière élastique (18) est munie d'une ouverture de canal de soupape se fermant de manière élastique (19).

3. Tête de brosse à dents selon l'une des revendications précédentes, dans laquelle la soupape de commande (12) présente une ouverture de soupape élastique (13a), qui peut être actionnée et déformée de manière élastique depuis une extrémité de la section de tuyau (7a) du côté du manche.

4. Tête de brosse à dents selon la revendication précédente, dans laquelle l'ouverture de soupape (13a) forme une pièce de couplage pour le couplage de la section de tuyau (7a) du côté du manche.

5. Tête de brosse à dents selon l'une des deux revendications précédentes, dans laquelle l'ouverture de soupape (13a) forme un embout de réception, qui peut s'étendre dans le sens radial de manière élastique lors de l'entrée de la section de tuyau (7a) du côté du manche.

6. Tête de brosse à dents selon l'une des revendications précédentes, dans laquelle la soupape de commande (12) présente au moins une lèvre d'étanchéité élastique (16), qui peut être actionnée par l'actionneur de soupape du côté du manche.

7. Tête de brosse à dents selon les deux revendications précédentes, dans laquelle la au moins une lèvre d'étanchéité (16) forme un fond de l'embout de réception (15a).

8. Tête de brosse à dents selon une des revendications précédentes, dans laquelle la au moins une lèvre d'étanchéité (16) est reliée avec l'ouverture de soupape (13a) de telle manière que la lèvre d'étanchéité (16) s'ouvre par une extension radiale de l'ouverture de soupape (13a).

9. Tête de brosse à dents selon l'une des revendications précédentes en liaison avec la revendication 2, dans laquelle la au moins une lèvre d'étanchéité est formée par la paroi de bocage élastique (18), dans laquelle la paroi de blocage précitée (18) présente de préférence une ouverture de canal de soupape placée environ au milieu et/ou en forme de fente (19).

10. Tête de brosse à dents selon une des revendications précédentes, dans laquelle la soupape de commande (12) présente un rétrécissement (20) sur sa superficie extérieure dans la zone de la au moins une lèvre d'étanchéité (16).

11. Tête de brosse à dents selon l'une des revendications précédentes, dans laquelle la soupape de commande (12) est formée en une seule pièce et/ou se compose d'un corps plein élastique, de préférence en plastique souple et/ou caoutchouc.

12. Tête de brosse à dents selon l'une des revendications précédentes, dans laquelle la soupape de commande (12) possède une pièce de liaison (15b), qui peut être connectée sur et/ou dans la section de tuyau (7b) du côté de la tête de la brosse.

13. Manche de brosse à dents équipé d'un dispositif de couplage (10) pour le couplage d'une tête de brosse à dents (2) portant un ensemble de soies (9) avec une section de tuyau (7a) du côté du manche pour le transport d'un matériau d'application sous forme de pâte, de gel et/ou de liquide, en particulier de la pâte dentifrice, vers la tête de brosse à dents (2), dans lequel le dispositif de couplage (10) présente un raccord de tuyau (11) pour le couplage de la section de tuyau (7a) du côté du manche sur une section de tuyau (7b) du côté de la tête de la brosse pour le transport du matériau d'application, **caractérisé en ce que** le raccord de tuyau (11) présente une soupape de commande (12), qui s'ouvre lors du couplage de la tête de la brosse (2) sur le manche (1) de la brosse à dents par le biais de l'activation d'un actionneur de soupape prévu sur la tête de la brosse à dents, en particulier l'extrémité de la section de tuyau du côté de la tête de la brosse et relie la section de tuyau (7a) du côté du manche avec une section de tuyau (7b) du côté de la tête de la brosse et se ferme lors du découplage du manche (1) de la section de tuyau (7a) du côté du manche.

14. Manche selon la revendication précédente, dans lequel la soupape de commande (12) présente un corps de soupape (13) avec un canal de soupape le traversant (15), dans lequel une paroi de blocage élastique (18) est munie d'une ouverture de canal de soupape se fermant de manière élastique (19).

15. Manche selon l'une des revendications 13 ou 14, dans lequel la soupape de commande (12) présente une ouverture de soupape élastique (15a), qui peut s'actionner et se déformer de manière élastique depuis l'extrémité de la section de tuyau (7b) du côté de la tête de la brosse.

16. Manche selon la revendication précédente, dans lequel l'ouverture de soupape (15a) forme une pièce de couplage pour le couplage de la section de tuyau (7b) du côté de la tête de la brosse.

17. Manche selon l'une des deux revendications précédentes, dans lequel l'ouverture de soupape (15a) forme un embout de réception, qui peut s'étendre dans le sens radial de manière élastique lors de l'entrée de l'extrémité du tuyau (7b) du côté de la tête de la brosse.

18. Manche selon l'une des revendications 13 à 17, dans lequel la soupape de commande (12) présente au moins une lèvre d'étanchéité élastique (16), qui peut être activée par l'actionneur de la soupape (7b) du côté de la tête de la brosse.

19. Manche selon les deux revendications précédentes, dans lequel la au moins une lèvre d'étanchéité (16) forme un fond de l'embout de réception (15a).

20. Manche selon une des revendications 13 à 19, dans lequel la au moins une lèvre d'étanchéité (16) est reliée avec l'ouverture de soupape (15a) de telle manière que la lèvre d'étanchéité (16) s'ouvre par une extension radiale de l'ouverture de soupape (13a, 15a).

21. Manche selon l'une des revendications 13 à 20 en liaison avec la revendication 14, dans lequel la au moins une lèvre d'étanchéité est formée par la paroi de blocage élastique (18), dans lequel la paroi de blocage précitée (18) présente de préférence une ouverture de canal de soupape placée environ au milieu et/ou en forme de fente (19).

22. Manche selon l'une des revendications 13 à 21, dans lequel la soupape de commande (12) présente un rétrécissement transversal (20) sur sa superficie extérieure dans la zone de la au moins une lèvre d'étanchéité (16).

23. Manche selon l'une des revendications 13 à 22, dans lequel la soupape de commande (12) est formée en une seule pièce et/ou est composée d'un corps plein élastique, de préférence en plastique souple et/ou caoutchouc.

24. Manche selon une des revendications 13 à 23, dans lequel la soupape de commande (12) possède une pièce de liaison (15b), qui peut être connectée sur et/ou dans la section de tuyau (7a) du côté de la pièce manuelle.

25. Brosse à dents électrique avec un manche selon l'une des revendications 13 à 24 ainsi qu'une tête de brosse à dents (2) pouvant être couplée avec celui-ci selon une des revendications 1 à 12.
